# EUROPÄISCHE PATENTSCHRIFT

(11) **EP 2 389 408 B1**
(45) Veröffentlichungstag und Bekanntmachung des Hinweises auf die Patenterteilung: **24.08.2016**
(21) Anmeldenummer: 10705778.8
(22) Anmeldetag: 21.01.2010
(51) Int. Cl.: C08J 9/00

(54) **SCHAUMSTOFFELEMENT MIT DARIN EINGELAGERTER ZELLULOSE**
FOAM ELEMENT HAVING CELLULOSE INCORPORATED INTO IT
ELÉMENT EN MOUSSE AVEC CELLULOSE INCORPORÉE

(30) Priorität: 22.01.2009 AT 1002009; 22.10.2009 US 253945 P
(43) Veröffentlichungstag der Anmeldung: 30.11.2011
(73) Patentinhaber: Eurofoam GmbH, 4550 Kremsmünster (AT)
(72) Erfinder: INNERLOHINGER, Josef, A-4880 Berg i.A. (AT); MARCHGRABER, Manfred, A-4550 Kremsmünster (AT); SCHAUFLER, Franz, A-4550 Kremsmünster (AT); SUCHOMEL, Friedrich, A-4861 Schörfling (AT)
(74) Vertreter: Burger, Hannes
(86) Internationale Anmeldenummer: PCT/AT2010/000022
(87) Internationale Veröffentlichungsnummer: WO 2010/083548

(56) Entgegenhaltungen:
- WO-A2-2006/094977
- DE-A1- 1 769 187
- GB-A- 1 063 474

## Beschreibung

Die Erfindung betrifft ein Schaumstoffelement mit einem im Schaumgerüst des Schaumstoffs eingelagerten hydrophilen Mittel, welches durch Zellulose gebildet ist, wobei das mit der Zellulose versetzte Schaumstoffelement eine reversible Feuchtigkeitsaufnahmefähigkeit aufweist, wie dies in Anspruch 1 beschrieben ist.

Schaumstoffe werden heute in vielen Bereichen des täglichen Lebens eingesetzt bzw. verwendet. In vielen dieser Anwendungen stehen die Schaumstoffe in Kontakt mit dem Körper, meist nur durch eine oder mehrere textile Zwischenschichten getrennt. Die meisten derartiger Schaumstoffe bestehen aus synthetischen Polymeren wie Polyurethan (PU), Polystyrol (PS), Synthesekautschuk usw., die grundsätzlich eine unzureichende Wasseraufnahmefähigkeit aufweisen. Insbesondere bei längerem Körperkontakt oder auch bei anstrengenden schweißtreibenden Tätigkeiten bildet sich aufgrund der hohen, nicht absorbierten Feuchte ein unangenehmes Körperklima aus. Es ist daher für die meisten Anwendungen erforderlich, solche Schaumstoffe hydrophil auszugestalten.

Dies kann wiederum auf unterschiedlichste Weise erzielt werden. Eine Möglichkeit besteht darin, wie dies beispielsweise aus der DE 199 30 526 A beschrieben ist, bereits das Schaumgerüst eines Polyurethan-Weichschaumstoffes hydrophil auszugestalten. Dies erfolgt durch die Umsetzung von mindestens einem Polyisozyanat mit mindestens einer Verbindung mit mindestens zwei mit Isozyanat reaktiven Verbindungen in Gegenwart von Sulfonsäuren, die eine oder mehrere Hydroxylgruppen tragen, und/oder deren Salze und/oder von mit Monoolen gestarteten Polyalkylenglykolethern erhältlich sind. Solche Schaumstoffe werden beispielsweise als Haushaltsschwamm oder für Hygieneartikel verwendet.

Eine weitere Möglichkeit wird in der DE 101 16 757 A1 beschrieben, bei der ein offenzelliger, hydrophiler aliphatischer Polymethan-Schaumstoff mit einer zusätzlichen eigenen Lage aus Zellulosefasern mit einem darin eingebetteten Hydrogel als Speichermittel verwendet wird.

Aus der EP 0 793 681 B1 bzw. der deutschen Übersetzung DE 695 10 953 T2 ist ein Verfahren zur Herstellung von Weichschäumen bekannt geworden, bei welchem so genannte superabsorbierende Polymere (SAPs), die auch als Hydrogele bezeichnet werden können, eingesetzt werden. Dabei können die verwendeten SAPs mit dem Vorpolymer vorgemischt werden, was das Verfahren sehr einfach für den Schaumhersteller macht. Derartige SAPs können ausgewählt werden aus mit Stärke oder Zellulose gepfropften SAPs unter Verwendung von z.B. Acrylnitril, Acrylsäure oder Acrylamid als ungesättigtes Monomer. Derartige SAPs werden beispielsweise von der Fa. Höchst/Cassella unter dem Namen SANWET IM7000 vertrieben.

In der WO 96/31555 A2 wird ein Schaumstoff mit zellularer Struktur beschrieben, wobei der Schaumstoff wiederum superabsorbierende Polymere (SAPs) enthält. Dabei kann das SAP aus einem synthetischen Polymer bzw. aber auch aus Zellulose gebildet sein. Der hier verwendete Schaumstoff dient dazu, Feuchtigkeit bzw. Flüssigkeiten zu absorbieren und diese im Schaumgerüst zurückzuhalten.

Aus der WO 2007/135069 A1 sind Schuhsohlen mit wasserabsorbierenden Eigenschaften bekannt geworden. Dabei werden schon vor dem Aufschäumen des Kunststoffes wasserabsorbierende Polymere zugesetzt. Derartige wasserabsorbierende Polymere werden üblicherweise durch Polymerisation einer wässrigen Monomerlösung und wahlweise einer anschließenden Zerkleinerung des Hydrogels erhalten. Das wasserabsorbierende Polymer bzw. das daraus gebildete getrocknete Hydrogel wird anschließend an seine Herstellung vorzugsweise gemahlen und gesiebt, wobei hier Partikelgrößen des gesiebten, getrockneten Hydrogels vorzugsweise unter 1000 µm und vorzugsweise über 10 µm Verwendung finden. Zusätzlich können auch noch zusätzlich zum Hydrogel Füllstoffe vor dem Aufschäumen eingemischt bzw. eingerührt werden, wobei hier als organische Füllstoffe beispielsweise Ruß, Melamin, Kollophonium sowie Zellulosefasern, Polyamid-, Polyacrylnitril-, Polyurethan-, Polyesterfasern auf der Grundlage von aromatischen und/oder aliphatischen Dicarbonsäureestern und Kohlenstofffasern Verwendung finden können. Dabei werden alle Stoffe getrennt voneinander in die Reaktionsmischung zur Herstellung des Schaumstoffelements hinein gegeben.

Die im Stand der Technik bekannten Schaumstoffe sind in ihren Eigenschaften derart ausgelegt, dass diese die von ihnen aufgenommene Feuchtigkeit über einen längeren Zeitraum speichern und zurückhalten. Die aufgenommene Feuchtigkeit bzw. das absorbierte Wasser wird erst nach einem Zeitraum von 24 Stunden wieder vollständig bezüglich der Feuchtigkeit der Umgebungsatmosphäre zum Ausgangszustand abgegeben, wie dies aus der WO 2007/135069 A1 zu entnehmen ist.

Diese Abgabegeschwindigkeit ist viel zu langsam für eine normale Gebrauchsweise wie beispielsweise von Matratzen, Schuhsohlen oder Fahrzeugsitzen, die pro Tag mehrere Stunden lang benutzt werden und daher wesentlich weniger als 24 Stunden Zeit zur Abgabe der aufgenommen Feuchtigkeit haben. Hierbei kann von einer so genannten Gleichgewichtsfeuchte gesprochen werden, wobei das jener Feuchtigkeitswert ist, bei dem der Schaum im Gleichgewicht mit der in der Umgebungsatmosphäre enthaltenen Feuchtigkeit ist.

Die GB 1,063,474 beschreibt Zellulose-II enthaltende Schäume mit guter Wasseraufnahmefähigkeit, die mit regenerierter Zellulose imprägniert sind. Der vorliegenden Erfindung liegt daher die Aufgabe zugrunde, ein Schaumstoffelement zu schaffen, das zur Verbesserung seines Feuchtemanagements im Hinblick auf die Abgabegeschwindigkeit der Feuchtigkeit ein Material enthält, welches darüber hinaus bei der Schaumherstellung noch einfach mit verarbeitbar ist.

Diese Aufgabe der Erfindung wird durch die Merkmale des Anspruches 1 gelöst. Der sich durch die Merkmale des Anspruches 1 ergebende Vorteil liegt darin, dass durch die Zugabe der Zellulose zum Schaumgerüst eine ausreichend hohe Aufnahmekapazität für Feuchtigkeit bzw. Flüssigkeit geschaffen wird, jedoch die aufgenommene Feuchtigkeit bzw. Flüssigkeit nach der Belastung durch die Benutzung so rasch als möglich wiederum an die Umgebungsatmosphäre abgegeben wird, sodass die Gleichgewichtsfeuchte wiederum erreicht wird. Durch die Verwendung von Zellulose-II wird so ein Werkstoff mit faseriger Struktur vermieden, wodurch die Rieselfähigkeit verbessert und das gegenseitige Verhaken an den Fasern vermieden wird. Die Zeitdauer der Abgabe hängt vom Verwendungszweck bzw. Einsatzzweck des Schaumstoffelements ab und die Gleichgewichtsfeuchte soll nach der Verwendung als Matratze beispielsweise spätestens nach 16 Stunden wieder erreicht werden. Bei Schuhsohlen oder Schuheinlagen ist diese Zeitdauer noch kürzer anzusetzen. Deshalb wird als hydrophiles Mittel ein gewisser Anteil von Zellulose zugesetzt, welche gleich während der Schaumherstellung in eine der den Schaum bildenden Komponenten eingemischt bzw. eingerührt wird. Durch die Zellulose wird nicht nur eine ausreichende Speicherkapazität erreicht sondern auch eine rasche erneute Abgabe der aufgenommenen Feuchtigkeit zurück an die Umgebung erzielt. Durch den zugesetzten Anteil an Zellulose wird erreicht, dass so die Aufnahme- und Abgabekapazität des Schaumstoffelements einfach und unterschiedlichste Anwendungsfälle abgestimmt werden kann.

Der sich durch die Merkmale des Anspruches 2 ergebende Vorteil liegt darin, dass durch die Zugabe der Zellulose zum Schaumgerüst eine ausreichend hohe Aufnahmekapazität für Feuchtigkeit bzw. Flüssigkeit geschaffen wird, jedoch die aufgenommene Feuchtigkeit bzw. Flüssigkeit nach der Belastung durch die Benutzung so rasch als möglich wiederum an die Umgebungsatmosphäre abgegeben wird, sodass die Gleichgewichtsfeuchte wiederum erreicht wird. Durch die spezielle Kombination der Zugabe von Zellulose-II und den dabei erzielten Dichtewerten wird eine sehr hohe Wasserdampfaufnahme bzw. die Aufnahme von Feuchtigkeit erzielt. Durch den hohen Wert der Zwischenspeicherung an Feuchtigkeit bzw. Wasser, welche während der Benutzung im Schaumstoffelement aufgenommen wird, kann für den Benutzer ein angenehmes und trockenes Gefühl während des Benutzens sichergestellt werden. Dadurch kommt der Körper so nicht in direkten Kontakt mit der Feuchtigkeit.

Der sich durch die Merkmale des Anspruches 3 ergebende Vorteil liegt darin, dass durch die Zugabe der Zellulose zum Schaumgerüst eine ausreichend hohe Aufnahmekapazität für Feuchtigkeit bzw. Flüssigkeit geschaffen wird, jedoch die aufgenommene Feuchtigkeit bzw. Flüssigkeit nach der Belastung durch die Benutzung so rasch als möglich wiederum an die Umgebungsatmosphäre abgegeben wird, sodass die Gleichgewichtsfeuchte wiederum erreicht wird. Durch die spezielle Kombination der Zugabe von Zellulose-II und den dabei erzielten Dichtewerten wird eine sehr hohe Wasserdampfaufnahme bzw. die Aufnahme von Feuchtigkeit erzielt. Dadurch kann bei gutem Verwendungskomfort eine rasche Abgabe der im Schaumstoffelement aufgenommenen Feuchtigkeit erreicht werden. So ist es möglich, auch nach einer hohen Aufnahme von Feuchtigkeit bereits nach einer relativ kurzen Zeitspanne eine erneute Benutzung vornehmen zu können und dabei gleich ein getrocknetes Schaumstoffelement erneut zur Verfügung zu haben.

Durch die Ausbildung nach Anspruch 4 ist es möglich, die Rieselfähigkeit der Partikel zu verbessern. Durch die nicht vollkommen glatte und unregelmäßige Oberflächenstruktur führt dies zu einer erhöhten spezifischen Oberfläche, welche zu einem ausgezeichneten Adsorptionsverhalten der Zellulosepartikel beiträgt.

Vorteilhaft ist auch eine Weiterbildung nach Anspruch 6, da so eine Kugelform vermieden und eine unregelmäßige Oberfläche ohne faserartige Ausfransungen oder Fibrillen erzielt wird. Damit wird eine stabförmige Ausbildung vermieden und eine günstige Verteilung innerhalb des Schaumgerüstes erzielt.

Durch die Ausbildung nach Anspruch 7 kann die Zellulose gleich während ihrer Herstellung mit zumindest einem zusätzlichen Zusatzstoff angereichert bzw. versetzt werden kann und so für die Zumischung in eine Reaktionskomponente lediglich ein einziger Zusatzstoff berücksichtigt werden muss.

Vorteilhaft ist auch eine Ausbildung nach Anspruch 8, da so ein Schaumstoffelement geschaffen werden kann, welches in den unterschiedlichsten Einsatzfällen Anwendung finden kann.

Gemäß einer Ausbildung wie im Anspruch 9 beschrieben, wird ein noch besserer Feuchtetransport innerhalb des Schaumstoffelements erzielt.

Weiters ist aber auch die Verwendung des Schaumstoffelements für verschiedenste Einsatzzwecke vorteilhaft, da so nicht nur der Tragekomfort während der Benutzung verbessert werden kann, sondern die nachfolgende Trocknungszeit wesentlich rascher von statten geht. Dies ist gerade bei den unterschiedlichsten Sitzen, Matratzen sowie all jenen Benutzungsformen von Vorteil, bei welchen vom Körper Feuchtigkeit abgegeben wird.

Zum besseren Verständnis der Erfindung wird diese anhand der nachfolgenden Figuren näher erläutert.

Es zeigen jeweils in vereinfachter Darstellung:
- Fig. 1: ein erstes Diagramm, in dem von unterschiedlichen Probenstücken mit unterschiedlicher Probenentnahmestelle die Feuchtigkeitsaufnahme zwischen zwei vorgegebenen Klimas gezeigt sind;
- Fig. 2: ein zweites Diagramm, welches die unterschiedliche Feuchtigkeitsaufnahme von herkömmlichem Schaum und von mit Zellulosepartikeln versetzten Schaum zeigt;
- Fig. 3: ein drittes Diagramm, welches die unterschiedliche Feuchtigkeitsabgabe von herkömmlichem Schaum und von mit Zellulosepartikeln versetzten Schaum zeigt;
- Fig. 4: ein Balkendiagramm, welches die Wasserdampfaufnahme von herkömmlichem Kunststoffschaum und im Vergleich dazu von mit Zellulosepartikeln versetztem Kunststoffschaum zeigt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Zuerst sei auf das im Kunststoffschaum, insbesondere in dem daraus hergestellten Schaumstoffelement, eingelagerte hydrophile Mittel, welches durch Zellulose gebildet ist, näher eingegangen. Damit wird das Schaumstoffelement aus dem Kunststoffschaum sowie dem darin eingelagerten hydrophilen Mittel gebildet. Der Kunststoffschaum seinerseits kann durch entsprechende Vermischung von miteinander aufschäumbaren Komponenten, die bevorzugt in flüssiger Form vorliegen, gebildet werden, wie dies bereits hinlänglich bekannt ist.

Wie bereits einleitend beschrieben, werden in der WO 2007/135 069 A1 zusätzlich zu den wasserabsorbierenden Polymeren als zusätzlicher Füllstoff Zellulosefasern angegeben. Diese sollen gegebenenfalls die mechanischen Eigenschaften des Schaumstoffes verstärken. Hier hat sich jedoch herausgestellt, dass die Zugabe faserförmiger Zusätze die Verarbeitung der aufzuschäumenden Ausgangsmischung erschwert, da sich deren Fließverhalten verändert. Beispielsweise würden fasrige Zellulosepartikel, die vor dem Schäumen insbesondere in die Polyol-Komponente eingemischt werden, dieses dickflüssiger machen, dass die Vermischung mit der weiteren Komponente, nämlich dem Isozyanat im Dosierkopf der Schäumungsanlage erschwert oder sogar behindert wird. Gleichfalls kann aber auch die Ausbreitung der Reaktionsmasse durch Fließen auf dem Transportband der Schäumungsanlage erschwert werden. Darüber hinaus können sich die fasrigen Zellulosepartikel auch vermehrt als Ablagerung in den Transportzuleitungen für die Reaktionsmischung festsetzten.

Daher ist die Zugabe von faserförmigen Zusätzen nur in gewissen Grenzen möglich. Je geringer der mengenmäßige Anteil der faserförmigen Zusätze, insbesondere der zellulosischen Kurzschnittfasern, ist, desto geringer wird auch die Wasseraufnahmefähigkeit, wenn diese dem Schaumstoff zugesetzt sind. So ist auch bereits bei einem Zusatz von fasrigem Zellulosepulver in geringen Mengen mit einem Anstieg der Viskosität, insbesondere der Polyol-Komponente, zu rechnen. Derartige Mischungen sind zwar prinzipiell zu verarbeiten, wobei jedoch während der Verarbeitung auf die geänderte Viskosität bedacht zu nehmen ist.

Zellulose bzw. daraus hergestellte Fäden, Fasern oder Pulver werden größtenteils durch Aufarbeitung und Vermahlung von Zellstoff oder aber auch Holz und/oder Einjahrespflanzen erhalten, wie dies allgemein bekannt ist.

Je nach Aufwand bei der Herstellung werden Pulver unterschiedlicher Qualitäten (Reinheit, Größe, usw.) erhalten. Gemeinsam ist all diesen Pulvern, dass diese eine faserige Struktur aufweisen, da natürliche Zellulose in jeder Größenordnung die ausgeprägte Tendenz hat, solch faserige Strukturen zu bilden. Auch MCC (Mikrokristalline Zellulose), die als sphärisch beschrieben wird, setzt sich trotzdem aus kristallinen Faserbruchstücken zusammen.

Abhängig von der Mikrostruktur unterscheidet man verschiedene Strukturtypen der Zellulose, insbesondere Zellulose-I und Zellulose-II. Diese Unterschiede zwischen diesen beiden Strukturtypen sind in der Fachliteratur ausführlich beschrieben und können darüber hinaus röntgenographisch festgestellt werden.

Ein überwiegender Teil der Zellulosepulver bestehen aus Zellulose-I. Für die Herstellung und Anwendung von Zellulose-I-Pulvern gibt es eine große Anzahl von Schutzrechten. Dort sind zum Beispiel auch viele technische Details der Vermahlung geschützt. Die Zellulose-I-Pulver haben eine faserige Natur, was für eine Anzahl von Anwendungen nicht sehr vorteilhaft bzw. sogar hinderlich ist. So können faserige Pulver oftmals zu einem Verhaken der Fasern führen. Damit ist auch eine eingeschränkte Rieselfähigkeit verbunden.

Zellulose-Pulver auf der Basis Zellulose-II sind derzeit am Markt kaum zu finden. Derartige Zellulose-Pulver mit dieser Struktur können entweder aus Lösung (meist Viskose) oder durch Zerkleinerung von Zellulose-II Produkten erhalten werden. Ein derartiges Produkt wäre beispielsweise Cellophan. Weiters sind derart feine Pulver mit einer Korngröße von 10 µm und darunter ebenfalls nur in sehr geringen Mengen erhältlich.

Die Herstellung von sphärischen, nicht-fibrillären Zellulosepartikeln mit einer Partikelgröße im Bereich von 1 µm bis 400 µm kann beispielsweise aus einer Lösung von underivatisierter Zellulose in einer Mischung aus einer organischen Substanz und Wasser erfolgen. Dabei wird diese Lösung frei fließend unter ihre Erstarrungstemperatur abgekühlt und anschließend die erstarrte Zelluloselösung zerkleinert. Daraufhin wird das Lösungsmittel ausgewaschen und die zerkleinerten, ausgewaschenen Partikel getrocknet. Die nachfolgende Zerkleinerung erfolgt zumeist mittels einer Mühle.

Besonders vorteilhaft ist es, wenn bereits in die vorbereitete Zelluloselösung vor deren Abkühlung und dem nachfolgenden Erstarren zumindest einzelne der nachfolgend genannten Zusatzstoffe mit eingebracht werden. Dieser Zusatzstoff kann ausgewählt sein aus der Gruppe umfassend Pigmente, anorganische Substanzen wie beispielsweise Titanoxide, insbesondere unterstöchiometrisches Titandioxid, Bariumsulfat, Ionenaustauscher, Polyethylen, Polypropylen, Polyester, Ruß, Zeolithe, Aktivkohle, polymere Superabsorber oder Flammschutzmittel. Diese sind dann in den später hergestellten Zellulosepartikeln gleich mit enthalten. Die Zugabe kann dabei an beliebigen Stellen in der Lösungsherstellung, in jedem Fall aber noch vor dem Erstarren erfolgen. Dabei können 1 Gew.% bis 200 Gew.% Zusatzstoffe, bezogen auf die Zellulosemenge eingemischt werden. Es hat sich gezeigt, dass diese Zusatzstoffe während des Auswaschens nicht entfernt werden, sondern in den Zellulosepartikeln verbleiben und auch ihre Funktion weitgehend beibehalten. So kann man beispielsweise beim Einmischen von Aktivkohle feststellen, dass deren aktive Oberfläche, die zum Beispiel mit der BET-Methode messbar ist, auch im fertigen Partikel vollständig erhalten bleibt. Nicht nur die an der Oberfläche des Zellulosepartikels befindlichen Zusatzstoffe, sondern auch die im Inneren befindlichen sind damit weiterhin vollständig zugänglich. Dies ist als besonders wirtschaftlich anzusehen, da in die vorbereitete Zelluloselösung nur geringe Mengen an Zusatzstoffen zugegeben werden müssen.

Dies hat den Vorteil, dass dem Reaktionsgemisch zur Herstellung des Schaumstoffelements nur die Zellulosepartikel mit den bereits darin enthaltenen funktionellen Zusatzstoffen beizugegeben sind. Bei dem bislang bekannten getrennten Zumischen aller Zusatzstoffe im Einzelnen in die Reaktionsmischung braucht hier für die Auslegung der Schäumung nur eine Art von Zusatz berücksichtigt werden. Dadurch können unkontrollierbare Schwankungen in der Eigenschaft vieler verschiedener dieser Additive vermieden werden.

Durch dieses Vorgehen wird nun ein Zellulosepulver erhalten, welches aus Partikeln besteht, die eine Zellulose - II - Struktur aufweisen. Das Zellulosepulver weist eine Partikelgröße in einem Bereich mit einer unteren Grenze von 1 µm und einer oberen Grenze von 400 µm bei einer mittleren Partikelgröße x50 mit einer unteren Grenze von 4 µm und einer oberen Grenze von 250 µm bei einer monomodalen Partikelgrößenverteilung auf. Weiters weist das Zellulosepulver bzw. die Partikel eine annähernd sphärische Partikelform mit unregelmäßiger Oberfläche auf, wobei eine Kristallinität im Bereich mit einer unteren Grenze von 15 % und einer oberen Grenze von 45 % gemäß der Raman-Methode liegt. Weiters weisen die Partikel eine spezifische Oberfläche (N2-Adsorbtion, BET) mit einer unteren Grenze von 0,2 m²/g und einer oberen Grenze von 8 m²/g bei einer Schüttdichte mit einer unteren Grenze von 250 g/l und einer oberen Grenze von 750 g/l auf.

Die Zellulose-II-Struktur wird durch das Auflösen und Wiederausfällen der Zellulose erzielt und unterscheidet die vorliegenden Partikel insbesondere von den aus Zellulose ohne Auflösungsschritt hergestellten Partikeln.

Die Partikelgröße im zuvor beschriebenen Bereich mit einer unteren Grenze von 1 µm und einer oberen Grenze von 400 µm mit einer Partikelverteilung, die durch einen x50-Wert mit einer unteren Grenze von 4 µm, insbesondere 50 µm und einer oberen Grenze von 250 µm, insbesondere 100 µm charakterisiert wird, wird natürlich durch die Betriebsweise bei der Zerkleinerung durch Mahlen beeinflusst. Durch die besondere Herstellungsweise durch Erstarren einer frei fließenden Zelluloselösung und die dadurch hervorgerufenen mechanischen Eigenschaften der erstarrten Zellulosemasse, lässt sich diese Partikelverteilung jedoch besonders leicht erreichen. Eine unter Scherbelastung erstarrte Zelluloselösung würde unter gleichen Zerkleinerungsbedingungen andere, aber insbesondere fibrilläre Eigenschaften aufweisen.

Die Form der verwendeten Partikel ist annähernd sphärisch. Diese Partikel weisen ein Achsenverhältnis (1:d) in einer unteren Grenze von 1 und einer oberen Grenze von 2,5 auf. Diese haben eine unregelmäßige Oberfläche, zeigen im Mikroskop aber keine faserartigen Ausfransungen oder Fibrillen. Es handelt sich also keineswegs um Kugeln mit glatter Oberfläche. Eine derartige Form wäre aber für die beabsichtigten Anwendungen auch nicht besonders günstig.

Auch die Schüttdichte der hier beschriebenen Zellulosepulver, die zwischen einer unteren Grenze von 250 g/l und einer oberen Grenze von 750 g/l liegt, ist deutlich höher als die von vergleichbaren, fibrillären Partikeln aus dem Stand der Technik. Die Schüttdichte hat verfahrenstechnisch wesentliche Vorteile, da sie auch die Kompaktheit der hier beschriebenen Zellulosepulver und damit unter anderem eine bessere Rieselfähigkeit, Einmischbarkeit in verschiedenste Medien und problemlosere Lagerfähigkeit ausdrückt.

Zusammenfassend wird nochmals festgehalten, dass die erhaltenen Partikel aus Zellulosepulver aufgrund ihrer sphärischen Struktur eine verbesserte Rieselfähigkeit aufweisen und ein kaum strukturviskoses Verhalten zeigen. Die Charakterisierung der Partikel mittels der in der Industrie weit verbreiteten Particel-Sizing-Geräte ist ebenfalls aufgrund der sphärischen Gestalt einfacher und aussagekräftiger. Die nicht vollkommen glatte und unregelmäßige Oberflächenstruktur führt zu einer erhöhten spezifischen Oberfläche, welche zum erhöhten ausgezeichnetem Adsorbtionsverhalten der Pulver beiträgt.

Unabhängig davon wäre es aber auch möglich, ein reines Zellulosepulver bzw. daraus gebildete Partikel mit weiteren Zellulosepartikeln zu vermischen, welche zusätzlich in einer unteren Grenze von 1 Gew.% und einer oberen Grenze von 200 Gew.% bezogen auf die Zellulosemenge, inkorporierte Zusatzstoffe enthalten. Einzelne dieser Zusatzstoffe können wiederum aus der Gruppe umfassend Pigmente, anorganische Substanzen wie beispielsweise Titanoxide, insbesondere unterstöchiometrisches Titandioxid, Bariumsulfat, Ionenaustauscher, Polyethylen, Polypropylen, Polyester, Aktivkohle, polymere Superabsorber und Flammschutzmittel gewählt sein.

In Abhängigkeit vom verwendeten Schäumungsverfahren zur Herstellung des Schaumstoffes haben sich insbesondere bei der CO₂-Schäumung die sphärischen Zellulosepartikel gegenüber den bekannten faserigen Zellulosepartikeln als besonders vorteilhaft erwiesen. Die CO₂-Schäumung kann dabei beispielsweise nach dem Novaflex-Cardio-Verfahren oder ähnlichen Verfahren erfolgen, wobei hier besonders feine Öffnungen in den Düsenplatten verwendet werden. Grobe und faserige Partikel würden die Düsenöffnungen sofort verstopfen und weitere Probleme bereiten. Deshalb ist gerade bei diesem Schäumverfahren der hohe Feinheitsgrad der sphärischen Zellulosepartikel besonders vorteilhaft.

Das erfindungsgemäße Schaumstoffelement bzw. das Vorgehen zur Herstellung des Schaumstoffelements wird nun anhand von einigen Beispielen näher erläutert werden. Diese sind als mögliche Ausführungsformen der Erfindung zu verstehen, wobei die Erfindung keineswegs auf den Umfang dieser Beispiele eingeschränkt ist.

Die Feuchtigkeitsangaben in Gew.% beziehen sich auf die Masse bzw. das Gewicht des gesamten Schaumstoffelements (Kunststoffschaum, Zellulosepartikel und Wasser bzw. Feuchtigkeit).

### Beispiel 1:

Das herzustellende Schaumstoffelement kann aus einem Kunststoffschaum wie beispielsweise aus einem Polyurethan-Weichschaumstoff, gebildet sein, wobei hier wiederum die unterschiedlichsten Herstellungsmöglichkeiten und Verfahren Anwendung finden können. Derartige Schäume weisen zumeist eine offenzellige Schaumstruktur auf. Dies kann beispielsweise auf einer Schäummaschine "QFM" der Firma Hennecke erfolgen, wobei der Schaumstoff im Hochdruckdosierverfahren in einem kontinuierlichen Prozess erzeugt wird. Alle erforderlichen Komponenten werden rechnerunterstützt über gesteuerte Pumpen genau dosiert und nach dem Rührprinzip gemischt. Eine dieser Komponenten ist im gegenständlichen Fall das Polyol, welches mit den zuvor beschriebenen Zellulosepartikeln versetzt worden ist. Aufgrund der Zumischung der Zellulosepartikel zu der einen Reaktionskomponente Polyol sind noch verschiedene Anpassungen der Rezeptur wie des Wassers, der Katalysatoren, der Stabilisatoren sowie des TDI notwendig, um den Einfluss des beigemischten Zellulosepulvers für die Herstellung und der nachfolgend erzielten physikalischen Werte weitgehend zu neutralisieren.

Es wurde ein möglicher erfindungsgemäßer Schaum mit 7,5 Gew.-% sphärischer Cellulosepartikel hergestellt. Dazu wurde zunächst ein sphärisches Cellulose-Pulver hergestellt, welches in weiterer Folge einer Reaktionskomponente des herzustellenden Schaumstoffes zugesetzt wurde. Der mengenmäßige Anteil der Zellulose bezüglich der gesamten Masse des Schaumstoffs, insbesondere des Kunststoffschaums kann dabei in einer unteren Grenze von 0,1 Gew.%, insbesondere 5 Gew.%, und einer oberen Grenze von 10 Gew.%, insbesondere 8,5 Gew.% liegen.

### Beispiel 2 (Vergleichsbeispiel):

Zum Vergleich gegenüber dem Beispiel 1 wurde hier aus einem Kunststoffschaum ein Schaumstoffelement hergestellt, welches ohne die Zugabe des Zellulosepulvers bzw. der Zellulosepartikel hergestellt worden ist. Dabei kann es sich um einen Standardschaum, einen HR-Schaum bzw. einen Viskoseschaum handeln, welche jeweils in bekannter Rezeptur hergestellt und verschäumt worden sind.

Zuerst wurde versucht festzustellen, ob die zugesetzten Zellulosepartikel in allen Schichten des hergestellten Schaumstoffelements bezüglich der Höhe gleichmäßig verteilt sind. Dies wurde so durchgeführt, dass anhand der Wasseraufnahme des Schaumstoffes in einem Normklima bei 20 °C und 55 % r.F. sowie in einem weiteren standardisierten Klima bei 23 °C und 93 % r.F. eine so genannte Gleichgewichtsfeuchte ermittelt wurde. Dazu wurden in drei verschiedenen Höhen des in Beispiel 1 sowie Beispiel 2 hergestellten Schaumstoffblockes gleich große Probenstücke entnommen und jeweils die Wasseraufnahme in den beiden zuvor beschriebenen, standardisierten Klimas gemessen. Dabei bedeutet 1,0 m die obere Schicht des Schaumstoffblockes, 0,5 m die mittlere Schicht und 0,0 m die untere Schicht des Schaumstoffes zur Entnahme der Probenstücke aus dem mit den Zellulosepartikeln versetzten Kunststoffschaum. Die Gesamthöhe des Blockes betrug ca. 1 m. Als Vergleich diente der zellulosefreie Kunststoffschaum aus Beispiel 2.

**Tabelle 1:**

| Probe | Bsp.1 Oben | Bsp. 1 Mitte | Bsp.1 Unten | Bsp. 2 |
|---|---|---|---|---|
| Normklima | 1,6 % | 1,6% | 1,5% | 0,7% |
| Körpergleichgewichtsfeuchte | 4,6% | 4,7% | 4,5% | 2,5% |

Wie aus den angegebenen Zahlenwerten zu ersehen ist, nimmt der mit den Zellulosepartikeln versetzte Schaum sowohl im Normklima als auch in dem weiteren standardisierten Klima mit der Körpergleichgewichtsfeuchte bezüglich des zellulosefreien Schaumstoffes wesentlich mehr Feuchtigkeit auf. Auch zeigt der unterschiedliche Entnahmeort der Probenstücke (oben, mitte, unten) eine relativ gute Übereinstimmung der Messergebnisse, wodurch auf eine homogene Verteilung der Zellulosepartikel im hergestellten Schaumstoffelement geschlossen werden kann.

Die nachfolgende Tabelle 2 zeigt die mechanischen Eigenschaften der beiden Schaumstoffe gemäß Beispiel 1 und Beispiel 2. Es ist deutlich zu erkennen, dass die mit Zellulosepartikel versetzte Schaumstofftype vergleichbare mechanische Eigenschaften wie der Schaumstoff ohne die zugesetzten Zellulosepartikeln aufweist. Das spricht für eine problemlose Verarbeitbarkeit der Reaktionskomponenten, insbesondere wenn in diesen die sphärischen Zellulosepartikel beigefügt sind.

**Tabelle 2:**

| | Schaumtype | | | |
|---|---|---|---|---|
| | **A** | **A** | **B** | **B** |
| **Pulveranteil** (Zellulosepartikel) | 0% | 10% | 0% | 7,50% |
| | | | | |
| Raumgewicht | 33,0 kg/m³ | 33,3 kg/m³ | 38,5 kg/m³ | 43,8 kg/m³ |
| Stauchhärte 40 % | 3,5 kPa | 2,3 kPa | 2,7 kPa | 3,0 kPa |
| Elastizität | 48% | 36% | 55% | 50% |
| Reißfestigkeit | 140 kPa | 100 kPa | 115 kPa | 106 kPa |
| Dehnung | 190% | 160% | 220% | 190% |
| wet compression set (22 Std./70 % Drück./50°C/95 % r.F.) | 6% | 50% | 6% | 9% |

Das Schaumstoffelement ohne zugesetzter Zellulosepartikel soll für beide angegebenen Schaumtypen folgende Sollwerte aufweisen:

| | Schaumtype | | | |
|---|---|---|---|---|
| | **A** | | **B** | |
| Raumgewicht | 33,0 kg/m³ | | 38,5 kg/m³ | |
| Stauchhärte 40 % | 3,4 kPa | | 2,7 kPa | |
| Elastizität | > 44 % | | > 45 % | |
| Reißfestigkeit | > 100 kPa | | > 100 kPa | |
| Dehnung | > 150 % | | > 150 % | |
| wet compression set (22 Std./70 % Drück./50°C/95 % r.F.) | <15% | | < 15 % | |

Das durchschnittliche Raumgewicht bzw. die Dichte des gesamten Schaumstoffelements liegt hierbei in einem Bereich in einer unteren Grenze von 30 kg/m³ und einer oberen Grenze von 45 kg/m³.

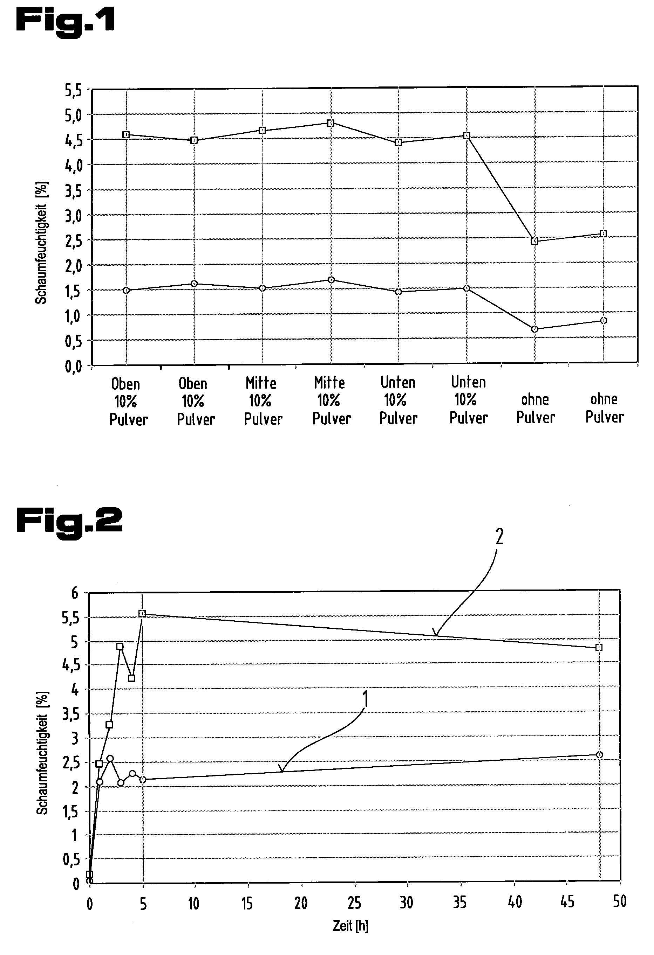

In der Fig. 1 ist die Schaumfeuchtigkeit in Prozent von gleichartigen Probenkörpern jedoch in unterschiedlicher Entnahmelage aus dem gesamten Schaumstoffelement gezeigt, wie dies bereits vorher beschrieben worden ist. Dabei ist die Schaumfeuchtigkeit in [%] auf der Ordinate aufgetragen. Der Anteil des zugesetzten Zellulosepulvers bzw. der Zellulosepartikel beträgt bei diesem Beispiel 10 Gew.% und bei den Zellulosepartikeln handelt es sich wiederum um die zuvor beschriebenen sphärischen Zellulosepartikel. Diese einzelnen unterschiedlichen Probenentnahmen mit und ohne Zusatz sind auf der Abszisse aufgetragen.

Die mit Kreisen dargestellten Messpunkte für die Schaumfeuchtigkeit der einzelnen Probenstücke stellen den Ausgangswert dar, wobei die in Quadraten dargestellten Messpunkte das gleiche Probenstück jedoch nach einem Tag der Feuchtigkeitsaufnahme zeigen. Die niedrigeren Ausgangswerte wurden bei dem zuvor beschriebenen Normklima ermittelt, wobei der weitere eingetragene Wert beim gleichen Probenstück die Feuchtigkeitsaufnahme im weiteren standardisierten Klima nach 24 Stunden bei 23°C und 93 % r.F. darstellt. Die Abkürzung r.F. steht für relative Feuchte bzw. Luftfeuchtigkeit und ist in % angegeben.

In der Fig. 2 ist der Verlauf der Feuchtigkeitsaufnahme über eine Zeitdauer von 48 Stunden gezeigt, wobei die Werte der Zeit (t) auf der Abszisse in [h] aufgetragen sind. Dabei ist der Ausgangszustand des Probenkörpers wiederum das zuvor definierte Normklima von 20 °C und 55 % r.F. Das weitere standardisierte Klima bei 23 °C und 93 % r.F. soll ein Benutzungsklima bzw. Körperklima darstellen, um so die Zeitspanne der Zunahme der Schaumfeuchtigkeit in Gew.% feststellen zu können. Die Werte der Schaumfeuchtigkeit sind auf der Ordinate in [%] aufgetragen.

So zeigt eine erste Diagrammlinie 1 mit den in Kreisen eingezeichneten Messpunkten ein Schaumstoffelement mit einer vorbestimmten Probengröße gemäß dem Beispiel 2 ohne zugesetzter Zellulosepartikel bzw. Zellulosepulver.

Eine weitere Diagrammlinie 2 mit als Quadrate dargestellte Messpunkte zeigt die Schaumfeuchtigkeit eines Schaumstoffelementes, welchem 7,5 Gew.% Zellulosepartikel bzw. Zellulosepulver zugesetzt worden sind. Bei den Zellulosepartikeln handelt es sich wiederum um die zuvor beschriebenen sphärischen Zellulosepartikel.

Der Verlauf der Feuchtigkeitsaufnahme über 48 Stunden zeigt, dass die Körpergleichgewichtsfeuchte "des Schaums" im "Körperklima" bereits nach kurzer Zeit erreicht ist. So kann man hier entnehmen, dass der mit den Zellulosepartikeln versetzte Schaumstoff innerhalb von 3 Stunden doppelt so viel Feuchtigkeit aufnehmen kann, wie ein Schaumstoff gemäß Beispiel 2 ohne zugesetzter Zellulosepartikel.

Die Messwerte für die Feuchtigkeitsaufnahme wurden durch Lagerung der Schaumstoffstücke bei einem Volumen von ca. 10 cm³ in einem Exsikkator mit eingestellter Luftfeuchte (über gesättigter KNO₃-Lösung und 93 % r.F.) nachdem die Proben zuvor getrocknet wurden. Nach definierten Zeiten wurden die einzelnen Proben dem Exsikkator entnommen und die Gewichtszunahme (=Wasseranfnahme) gemessen. Die Schwankungen der Feuchteaufnahme sind durch das Proben-Handling sowie leichte Inhomogenitäten der Proben zu erklären.

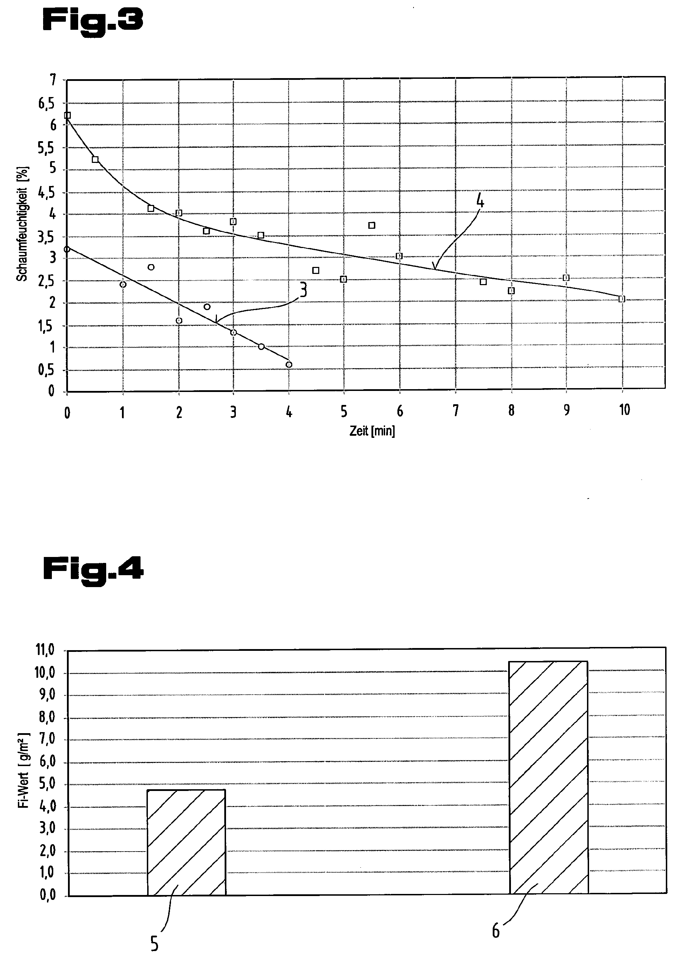

In der Fig. 3 ist das Trocknungsverhalten eines Schaumstoffelements mit zugesetzten Zellulosepartikeln nach Beispiel 1 im Vergleich zu einem Schaumstoff aus Beispiel 2 ohne derartige Zellulosepartikeln gezeigt. Zum Vergleich wurden beide Probenstücke zunächst 24 Stunden im "Körperklima" konditioniert. Dies wies wiederum bei 23 °C eine relative Feuchte von 93 % auf. Die Werte der Schaumfeuchtigkeit sind wiederum auf der Ordinate in [%] und die Zeit (t) in [min] auf der Abszisse aufgetragen. Die angegebenen %-Wert der Schaumfeuchtigkeit sind Gewichtsprozent bezogen auf die Masse bzw. das Gewicht des gesamten Schaumstoffelements (Kunststoffschaum, Zellulosepartikel und Wasser bzw. Feuchtigkeit).

Die in Kreisen dargestellten Messpunkte betreffen wiederum das Schaumstoffelement gemäß dem Beispiel 2 ohne zugesetzter Zellulosepartikel, wobei eine entsprechende Diagrammlinie 3 eingetragen worden ist, welche die Abnahme der Feuchtigkeit zeigt. Die Messpunkte, die als Quadrate dargestellt wurden, sind von dem Schaumstoffelement mit zugesetzten Zellulosepartikeln ermittelt worden. Eine entsprechende weitere Diagrammlinie 4 zeigt ebenfalls die rasche Feuchtigkeitsabnahme. Der Anteil der Zellulosepartikel betrug wiederum 7,5 Gew.%.

Hier wird deutlich, dass die Gleichgewichtsfeuchte von 2 % bereits nach ca. 10 Minuten wieder erreicht wird. Dies ist erheblich schneller als bei einem Schaumstoff gemäß dem Stand der Technik, bei welchem die Abgabe einer vergleichbaren Wassermenge mehrere Stunden dauert.

Wurde nun das mit den Zellulosepartikeln der Kristallmodifikation von Zellulose-II versetzte Schaumstoffelement über eine Zeitdauer von 24 Stunden im "Körperklima" konditioniert und nachfolgend dem "Normklima" ausgesetzt, hat dieses im "Körperklima" zuerst einen Feuchtigkeitsgehalt von größer 5 Gew.% aufgenommen und innerhalb einer Zeitspanne von 2 min nach dem Einbringen ins "Normklima" den Feuchtigkeitsgehalt um zumindest zwei (2) Gew.% verringert.

In der Fig. 4 ist in einem Balkendiagramm die Wasserdampfaufnahme "Fi" nach Hohenstein in [g/m²] dargestellt, wobei diese Werte auf der Ordinate aufgetragen sind.

Der Zeitraum, in welchem die Wasserdampfaufnahme ausgehend vom zuvor definierten Normklima von 20 °C und 55 % r.F. im ebenfalls zuvor beschriebenen standardisierten Klima bei 23 °C und 93 % r.F. (Benutzungsklima bzw. Körperklima) erfolgt ist, betrug für die beiden ermittelten Messwerte 3 (drei) Stunden. Bei den Probenkörpern handelt es sich jeweils um die zuvor beschriebene Schaumtype "B". So zeigt ein erster Diagrammbalken 5 den Schaumtyp "B" ohne zugesetzter Zellulose bzw. Zellulosepartikel. Der Messwert beträgt hier in etwa 4,8 g/m². Der mit der Zellulose versetzte Schaumkörper wies hingegen einen dazu höheren Wert von ca. 10,4 g/m² auf und ist dieser in einem weiteren Diagrammbalken 6 dargestellt. Damit liegt dieser weitere Wert über einem Wert von 5 g/m² nach Hohenstein.

Das Schaumstoffelement wird aus einem Kunststoffschaum gebildet, wobei als bevorzugter Schaumstoff ein PU-Schaum verwendet wird. Wie zuvor bei den einzelnen Diagrammen erläutert, wird für die Bestimmung der Feuchtigkeitsaufnahme von einer so genannten Gleichgewichtsfeuchte ausgegangen, welche ein "Normklima" darstellt und bei 20°C eine relative Feuchte von 55 % aufweist. Für die Simulation der Benutzung wurde ein weiteres, standardisiertes Klima definiert, welches bei 23°C eine relative Feuchte von 93 % aufweist. Dieses weitere standardisierte Klima soll beispielsweise die Feuchtigkeitseinbringung während der Benutzung durch einen Schweiß absondernden Körper eines Lebewesens, insbesondere eines Menschen, darstellen. Dazu soll die im Schaumstoffelement eingelagerte Zellulose während der Benutzung die aufgenommene Feuchtigkeit nach Beendigung der Benutzung über einen Zeitraum in einem Bereich mit einer unteren Grenze von 1 Stunde und einer oberen Grenze von 16 Stunden wiederum abgegeben haben und so das gesamte Schaumstoffelement die Gleichgewichtsfeuchte bezüglich der Umgebungsatmosphäre angenommen haben. Dies bedeutet, dass die Zellulose die darin gespeicherte Feuchtigkeit nach der Beendigung der Benutzung sehr rasch an die Umgebungsatmosphäre abgibt und dadurch eine Trocknung des Schaumstoffelements erfolgt.

Wie bereits einleitend erwähnt, wird dann von einer Gleichgewichtsfeuchte gesprochen, wenn das Schaumstoffelement einer der zuvor beschriebenen Umgebungsatmosphären so lange ausgesetzt ist, bis der Feuchtigkeitswert des Schaumstoffelements (Schaumfeuchtigkeit) im Gleichgewicht mit dem in der Umgebungsatmosphäre enthaltenen Feuchtigkeitswert ist. Bei Erreichen der Gleichgewichtsfeuchte findet dann kein gegenseitiger Austausch an Feuchtigkeit zwischen dem Schaumstoffelement und der das Schaumstoffelement umgebenden Umgebungsatmosphäre mehr statt.

So kann die zuvor beschriebene Prüfmethode beispielsweise derart durchgeführt werden, dass das Schaumstoffelement der ersten Umgebungsatmosphäre mit dem ersten Klima mit der vorbestimmten Temperatur und relativen Luftfeuchtigkeit, wie z.B. 20°C und 55 % r.F.; so lange ausgesetzt ist, bis die Gleichgewichtsfeuchte mit dieser Umgebungsatmosphäre erreicht ist und anschließend das gleiche Schaumstoffelement einer zweiten, zur ersten Umgebungsatmosphäre geänderten bzw. unterschiedlichen Umgebungsatmosphäre ausgesetzt wird. Diese zweite Umgebungsatmosphäre weist ein zweites Klima mit einer bezüglich des ersten Klimas höheren Temperatur und/oder höheren relativen Luftfeuchtigkeit, wie z.B. 23 °C und 93 % r.F., auf. Dabei steigt der Wert der Schaumfeuchtigkeit an, wobei die Feuchtigkeit von der im Schaumstoff eingelagerten Zellulose aufgenommen wird. Anschließend wird das gleiche Schaumstoffelement wiederum der ersten Umgebungsatmosphäre ausgesetzt, wobei dann nach dem zuvor angegebenen Zeitraum zwischen 1 Stunde und 16 Stunden wiederum der Ausgangswert der Schaumfeuchtigkeit entsprechend der Gleichgewichtsfeuchte bezüglich der ersten Umgebungsatmosphäre erreicht ist. So wird innerhalb dieser Zeitspanne die zuvor in der zweiten Umgebungsatmosphäre aufgenommenen Feuchtigkeit von der Zellulose wiederum an die Umgebungsatmosphäre abgegeben und damit reduziert.

Der hier angegebene untere Wert von 1 Stunde ist von der Menge der aufgenommenen Flüssigkeit bzw. Feuchte abhängig und kann aber auch wesentlich darunter liegen und auch nur einige Minuten betragen.

Unabhängig von den zuvor beschriebenen sphärischen Zellulosepartikeln ist es auch noch möglich, die Zellulose in Form von Faserschnitt mit einer Faserlänge in einer unteren Grenze von 0,1 mm und einer oberen Grenze von 5 mm zu bilden. Gleichfalls wäre es aber auch noch möglich, dass die Zellulose in Form von gemahlenen Fasern mit einer Partikelgröße in einer unteren Grenze von 50 µm und einer oberen Grenze von 0,5 mm gebildet sind.

Der herzustellende Schaumstoff weist je nach Anwendungsfall unterschiedliche Schaumstoffeigenschaften auf, die durch die verschiedensten physikalischen Eigenschaften gekennzeichnet sind. Die Stauchhärte bei 40 % Drückung kann eine untere Grenze von 1,0 kPa und eine obere Grenze von 10,0 kPa aufweisen. Die Elastizität beim Fallkugeltest kann einen Wert mit einer unteren Grenze von 5 % und einer oberen Grenze von 70 % aufweisen. Dieses Prüfverfahren wird gemäß der Norm EN ISO 8307 durchgeführt und dabei die Rücksprunghöhe und damit verbunden die Rückprallelastizität ermittelt.

Handelt es sich bei dem hergestellten Schaumstoffelement um eines aus einem Polyurethan-Schaumstoff, insbesondere einem Weichschaumstoff, kann dieser sowohl auf der Basis TDI als auch auf der Basis von MDI hergestellt werden. Es können aber auch andere Schaumstoffe, wie beispielsweise Polyethylen-Schaum, Polystyrol-Schaum, Polycarbonat-Schaum, PVC-Schaum, Polyimid-Schaum, Silikonschaum, PMMA (Polymethylmethacrylat) - Schaum, Kautschuk-Schaum, Anwendung finden, welche ein Schaumgerüst ausbilden, in welches die Zellulose eingelagert werden kann. Die hohe Feuchtigkeitsaufnahme ist dabei unabhängig vom Rohstoffsystem sowie nach welchem Verfahren der Schaumstoff hergestellt wird, da die reversible Feuchtigkeitsaufnahmefähigkeit durch die Einarbeitung bzw. Einbettung der Zellulose erzielt wird. Bevorzugt werden offenzellige Schaumstofftypen eingesetzt, die einen ungehinderten Luftaustausch mit der Umgebungsatmosphäre ermöglichen. Gleichfalls ist auch eine homogene Verteilung der dem Schaumgerüst zugesetzten Zellulose wesentlich, wie dies bei den zuvor durchgeführten Versuchen bereits beschrieben worden ist. Sollte kein offenzelliges Schaumgerüst vorliegen, kann dieses durch gezielte und bekannte Nachbehandlungen offenzellig ausgebildet werden.

Wird als Ausgangsmaterial Polyol als eine der Reaktionskomponenten verwendet, kann dort die Zellulose vor dem Verschäumen hinzugesetzt werden. Die Zugabe kann durch Einrühren bzw. Dispergieren der Zellulose nach denen in der Branche bekannten Methoden erfolgen. Als Polyol fungiert jenes, das für den entsprechenden Schaumstofftyp notwendig ist und wird in rezeptnotwendiger Menge eingesetzt. Dabei ist jedoch noch der Feuchtegehalt der Zellulosepartikel bei der Erstellung der Rezeptur zu berücksichtigen.

Das Schaumstoffelement kann zur Bildung von einzelnen Kunststofferzeugnissen dienen, wobei das Kunststofferzeugnis ausgewählt ist aus der Gruppe umfassend Matratzen, Möbelpolster und Kissen.

Die Ausführungsbeispiele zeigen mögliche Ausführungsvarianten des Schaumstoffelements mit einem im Kunststoffschaum eingelagerten hydrophilen Mittel, welches durch Zellulose gebildet ist, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfängmitumfässt.

Die den eigenständigen erfinderischen Lösungen zugrunde liegende Aufgabe kann der Beschreibung entnommen werden.

### Bezugszeichenaufstellung

- 1: Diagrammlinie
- 2: Diagrammlinie
- 3: Diagrammlinie
- 4: Diagrammlinie
- 5: Diagrammbalken

- 6: Diagrammbalken

## Patentansprüche

1. Schaumstoffelement mit einem im Schaumgerüst des Schaumstoffs eingelagerten und durch Zellulose gebildeten hydrophilen Mittel, wobei das mit der Zellulose versetzte Schaumstoffelement eine reversible Feuchtigkeitsaufnahmefähigkeit aufweist, **dadurch gekennzeichnet, dass** die Zellulose durch einen Strukturtyp der Kristallmodifikation von Zellulose-II gebildet ist und dass ein Anteil der Zellulose bezüglich der gesamten Masse des Schaumstoffs in einer unteren Grenze von 0,1 Gew. %, insbesondere 5 Gew. %, und einer oberen Grenze von 10 Gew. %, insbesondere 8,5 Gew. %, gewählt ist und
dass ein Wert einer Schaumfeuchtigkeit des Schaumstoffelements ausgehend von einem Ausgangswert der Schaumfeuchtigkeit entsprechend einer Gleichgewichtsfeuchte bezüglich einer ersten Umgebungsatmosphäre mit einem ersten Klima mit vorbestimmter Temperatur von 20°C und relativer Luftfeuchtigkeit von 55% r.F. während der Benutzung in einer gegenüber der ersten Umgebungsatmosphäre geänderten zweiten Umgebungsatmosphäre mit einem zweiten Klima mit einer bezüglich des ersten Klimas höheren Temperatur von 23°C und höheren relativen Luftfeuchtigkeit von 93% r.F. erhöht wird
und die von der im Schaumstoffelement eingelagerten Zellulose-II aufgenommene Feuchtigkeit nach der Benutzung in der zweiten Umgebungsatmosphäre nach einem Zeitraum in der ersten Umgebungsatmosphäre mit einer Dauer in einem Bereich mit einer unteren Grenze von 1 Stunde und einer oberen Grenze von 16 Stunden bis zur erneuten Erreichung des Ausgangswertes der Schaumfeuchtigkeit entsprechend der Gleichgewichtsfeuchte bezüglich der ersten Umgebungsatmosphäre wiederum abgegeben ist.

2. Schaumstoffelement nach Anspruch 1, **dadurch gekennzeichnet, dass** das Schaumstoffelement ein Raumgewicht in einer unteren Grenze von 30 kg/m³ und einer oberen Grenze von 45 kg/m³ aufweist und die Wasserdampfaufnahme nach Hohenstein einen Fi-Wert von größer 5 g/m² aufweist.

3. Schaumstoffelement nach Anspruch 1 oder 2, **dadurch gekennzeichnet, dass** das Schaumstoffelement ein Raumgewicht in einer unteren Grenze von 30 kg/m³ und einer oberen Grenze von 45 kg/m³ aufweist und ein Wert der Schaumfeuchtigkeit des Schaumstoffelements von größer 5 % ausgehend von der zweiten Umgebungsatmosphäre mit dem zweiten Klima von 23°C und einer relativen Feuchte von 93% nach dem Einwirken der ersten Umgebungsatmosphäre mit dem ersten Klima von 20 °C und einer relativen Feuchte von 55 % innerhalb einer Zeitspanne von 2 min um zumindest 2 % verringert ist.

4. Schaumstoffelement nach einem der Ansprüche 1 bis 3, **dadurch gekennzeichnet, dass** die Zellulose-II durch sphärische Zellulosepartikel gebildet ist.

5. Schaumstoffelement nach Anspruch 4, **dadurch gekennzeichnet, dass** die Zellulosepartikel eine Partikelgröße mit einer unteren Grenze von 1 µm und einer oberen Grenze von 400 µm mit einer Partikelverteilung, die durch einen x50-Wert mit einer unteren Grenze von 4 µm, insbesondere 50 µm und einer oberen Grenze von 250 µm, insbesondere 100 µm charakterisiert wird, aufweisen.

6. Schaumstoffelement nach Anspruch 4 oder 5, **dadurch gekennzeichnet, dass** die sphärischen Zellulosepartikel ein Achsenverhältnis (l:d) in einer unteren Grenze von 1 und einer oberen Grenze von 2,5 aufweisen.

7. Schaumstoffelement nach einem der vorhergehenden Ansprüche, **dadurch gekennzeichnet, dass** die Zellulose zumindest einen der Zusatzstoffe aus der Gruppe umfassend Pigmente, anorganische Substanzen wie beispielsweise Titanoxid, insbesondere unterstöchiometrisches Titanoxid, Bariumsulfat, Ionenaustauscher, Polyethylen, Polypropylen, Polyester, Ruß, Zeolithe, Aktivkohle, polymere Superabsorber oder Flammschutzmittel enthält.

8. Schaumstoffelement nach einem der vorhergehenden Ansprüche, **dadurch gekennzeichnet, dass** der Schaumstoff aus der Gruppe von Polyurethanschaum (PU-Schaum), Polyethylen-Schaum, Polystyrol-Schaum, Polycarbonat-Schaum, PVC-Schaum, Polyimid-Schaum, Silikonschaum, PMMA (Polymethylmethacrylat) - Schaum, Kautschuk-Schaum gewählt ist.

9. Schaumstoffelement nach einem der vorhergehenden Ansprüche, **dadurch gekennzeichnet, dass** der Schaumstoff eine offenzellige Schaumstruktur aufweist.

10. Verwendung eines Schaumstoffelements nach einem der Ansprüche 1 bis 9 zur Bildung eines Kunststofferzeugnisses, wobei das Kunststofferzeugnis ausgewählt ist aus der Gruppe umfassend Matratzen, Möbelpolster, Kissen.

## Claims

1. A foam element with a hydrophilic substance formed by cellulose and incorporated in the foam structure of the foam, wherein the foam element containing the cellulose has a reversible capacity to absorb moisture, **characterised in that** the cellulose is formed by a structure type based on the crystal modification of cellulose-II and that a proportion of cellulose by reference to the total weight of the foam is selected from a range with a lower limit of 0.1 % by weight, in particular 5 % by weight, and an upper limit of 10 % by weight, in particular 8.5 % by weight, and
that a value of a foam moisture of the foam element is increased from an initial value of the foam moisture corresponding to an equilibrium moisture by reference to a first ambient atmosphere with a first climate based on a predefined temperature of 20 °C and relative air humidity of 55 % RH during use in a second ambient atmosphere different from the first ambient atmosphere with a second climate with a higher temperature of 23 °C and a higher relative air humidity of 93 % RH compared with the first climate and the moisture absorbed by the cellulose-II incorporated in the foam element after use in the second ambient atmosphere is evaporated after a period in the first ambient atmosphere with a duration within a range with a lower limit of 1 hour and an upper limit of 16 hours until the initial value of the foam moisture corresponding to the equilibrium moisture by reference to the first ambient atmosphere is restored again.

2. The foam element according to claim 1, **characterised in that** the foam element has a density within a lower limit of 30 kg/m³ and an upper limit of 45 kg/m³, and the uptake of water vapour based on Hohenstein has an Fi value of more than 5 g/m².

3. The foam element according to claim 1 or 2, **characterized in that** the foam element has a density with a lower limit of 30 kg/m³ and an upper limit of 45 kg/m³ and a value of the foam moisture of the foam element of more than 5 % from the second ambient atmosphere with the second climate of 23 °C and a relative humidity of 93 % is reduced by at least 2 % due to the effect of the first ambient atmosphere with the first climate based on 20 °C and a relative humidity of 55 % within a period of 2 min.

4. The foam element according to one of claims 1 to 3, **characterised in that** the cellulose-II is formed by spherical cellulose particles.

5. The foam element according to claim 4, **characterised in that** the cellulose particles have a particle size with a lower limit of 1 µm and an upper limit of 400 µm with a particle distribution **characterised by** a x50 value with a lower limit of 4 µm, in particular 50 µm, and an upper limit of 250 µm, in particular 100 µm.

6. The foam element according to claim 4 or 5, **characterised in that** the spherical cellulose particles have an axis ratio (1:d) within a lower limit of 1 and an upper limit of 2.5.

7. The foam element according to one of the preceding claims, **characterised in that** the cellulose contains at least one of the additives from the group comprising pigments, inorganic substances such as titanium oxide, in particular below-stoichiometric titanium oxide, barium sulphate, ion exchangers, polyethylene, polypropylene, polyester, carbon black, zeolite, activated carbon, polymeric superabsorbers or flame retardants, for example.

8. The foam element according to one of the preceding claims, **characterised in that** the foam is selected from the group comprising polyurethane foam (PU foam), polyethylene foam, polystyrene foam, polycarbonate foam, PVC foam, polyimide foam, silicone foam, PMMA (polymethyl methacrylate) foam, rubber foam.

9. The foam element according to one of the preceding claims, **characterised in that** the foam has an open cell foam structure.

10. Use of a foam element according to one of claims 1 to 9 to make a plastic product, wherein the plastic product is selected from the group comprising mattresses, furniture upholstery, pillows.

## Revendications

1. Elément en mousse comprenant un agent hydrophile, incorporé dans la charpente alvéolaire du matériau mousse et formé de cellulose, l'élément en mousse additionné de la cellulose présentant une capacité réversible d'absorption de l'humidité, **caractérisé en ce que** la cellulose est formée par un type de structure de la modification cristalline de la cellulose-II, et qu'on choisit une proportion de cellulose, par rapport à la masse totale du matériau mousse, avec une limite inférieure de 0,1 % en poids, en particulier de 5 % en poids, et une limite supérieure de 10 % en poids, en particulier de 8,5 % en poids, et qu'une valeur de l'humidité de la mousse de l'élément en mousse est augmentée, à partir d'une valeur de départ de l'humidité de la mousse correspondant à l'humidité à l'équilibre, par rapport à une première atmosphère ambiante ayant des premières conditions climatiques correspondant à une température prédéfinie de 20°C et à une humidité relative de l'air de 55 % H.R., pendant une utilisation dans une deuxième atmosphère ambiante, modifiée par rapport à la première atmosphère ambiante, ayant des deuxièmes conditions ambiantes correspondant à une température de 23°C et une humidité relative de l'air de 93 % H.R., plus élevées que celles des premières conditions ambiantes,
et l'humidité absorbée par la cellulose-II incorporée dans l'élément en mousse est, après l'utilisation dans la deuxième atmosphère ambiante, de nouveau évacuée après un laps de temps, dans la première atmosphère ambiante, correspondant à une durée comprise dans une plage ayant une limite inférieure de 1 heure et une limité supérieure de 16 heures, jusqu'à atteindre de nouveau la valeur de départ de l'humidité de la mousse, correspondant à l'humidité à l'équilibre par rapport à une première atmosphère ambiante.

2. Elément en mousse selon la revendication 1, **caractérisé en ce que** l'élément en mousse a une masse volumique correspondant à une limite inférieure de 30 kg/m³ et une limite supérieure de 45 kg/m³, et que l'absorption de vapeur d'eau selon Hohenstein présente une valeur Fi supérieure à 5 g/m².

3. Elément en mousse selon la revendication 1 ou 2, **caractérisé en ce que** l'élément en mousse présente une masse volumique correspondant à une limite inférieure de 30 kg/m³ et une limite supérieure de 45 kg/m³, et qu'une valeur de l'humidité de la mousse de l'élément en mousse, supérieure à 5 %, est diminuée d'au moins 2 % en partant de la deuxième atmosphère ambiante correspondant aux deuxièmes conditions ambiantes de 23°C et d'une humidité relative de 93 %, après action de la première atmosphère ambiante correspondant aux premières conditions ambiantes de 20°C et d'une humidité relative de 55 %, et ce, en un laps de temps de 2 min.

4. Elément en mousse selon l'une des revendications 1 à 3, **caractérisé en ce que** la cellulose-II est formée de particules de cellulose sphériques.

5. Elément en mousse selon la revendication 4, **caractérisé en ce que** les particules de cellulose ont une granulométrie correspondant à une limite inférieure de 1 µm et une limite supérieure de 400 µm, avec une distribution des particules qui est **caractérisée par** une valeur x50 correspondant à une limite inférieure de 4 µm, en particulier de 50 µm, et une limite supérieure de 250 µm, en particulier de 100 µm.

6. Elément en mousse selon la revendication 4 ou 5, **caractérisé en ce que** les particules de cellulose sphériques présentent un rapport entre axes (1:d) correspondant à une limite inférieure de 1 et une limite supérieure de 2,5.

7. Elément en mousse selon l'une des revendications précédentes, **caractérisé en ce que** la cellulose contient au moins l'un des additifs du groupe comprenant les pigments, les substances inorganiques telles que par exemple l'oxyde de titane, en particulier l'oxyde de titane sous-stoechiométrique, le sulfate de baryum, les échangeurs d'ions, le polyéthylène, le polypropylène, les polyesters, le noir de carbone, les zéolites, le charbon actif, les superabsorbants polymères ou les agents d'ignifugation.

8. Elément en mousse selon l'une des revendications précédentes, **caractérisé en ce que** la mousse est choisie parmi la mousse de polyuréthanne (mousse PU), la mousse de polyéthylène, la mousse de polystyrène, la mousse de polycarbonate, la mousse de PVC, la mousse de polyimide, la mousse de silicone, la mousse de PMMA (poly(méthacrylate de méthyle)), le caoutchouc mousse.

9. Elément en mousse selon l'une des revendications précédentes, **caractérisé en ce que** la mousse présente une structure de mousse à alvéoles ouverts.

10. Utilisation d'un élément en mousse selon l'une des revendications 1 à 9 pour former un produit en un matériau plastique, le produit en un matériau plastique étant choisi dans le groupe comprenant les matelas, les rembourrages de meubles, les coussins.
